# EUROPÄISCHE PATENTANMELDUNG

(11) **EP 3 222 566 A1**
(43) Veröffentlichungstag der Anmeldung: **27.09.2017**
(21) Anmeldenummer: 16000678.9
(22) Anmeldetag: 21.03.2016
(51) Int. Cl.: B65G 67/08, B65G 21/14

(54) **BELADEVORRICHTUNG ZUM TRANSPORTIEREN VON STÜCKGUTTEILEN**

(71) Anmelder: BEUMER GmbH & Co. KG, 59269 Beckum (DE)
(72) Erfinder: Gersmann, Robert, 59320 Ennigerloh-Enniger (DE); Klann, Roman, 59269 Beckum (DE); Tellen, Marc, 48291 Telgte (DE)
(74) Vertreter: Philipp, Matthias

(57) **Zusammenfassung**

Beladevorrichtung (2) zum Transportieren von Stückgutteilen zu einem Transportmittel (4), insbesondere LKW, mit einer Transportstrecke (10), die sich zwischen einer Zuführposition (12) und einer Ladeposition (13) erstreckt, wobei die Transportstrecke nach der Zuführposition mindestens einen angetriebenen Transportförderer (18) zum aktiven Transportieren der Stückgutteile, daran anschließend mindestens eine antriebslose Pufferstrecke (20) zum passiven Transportieren der Stückgutteile und daran anschließend mindestens einen Abgabeförderer (21) zum gesteuerten Abgeben der Stückgutteile an der Ladeposition aufweist, wobei zum Ausgleich von variablen Höhenunterschieden zwischen der Zuführposition und der Ladeposition der Transportförderer und die Pufferstrecke voneinander abweichende Steigungen aufweisen, und Verfahren zum Beladen von Stückgutteilen unter Verwendung der Beladevorrichtung.

## Beschreibung

Die Erfindung betrifft eine Beladevorrichtung zum Transportieren von Stückgutteilen wie Säcken, Beuteln, Karton, Kisten usw. zu einem Transportmittel wie Lastkraftwagen, Eisenbahnwaggons oder Wechselbehälter, mit einer Transportstrecke, die sich zwischen einer Zuführposition und einer Ladeposition erstreckt, wobei die Transportstrecke nach der Zuführposition mindestens einen angetriebenen Transportförderer zum aktiven Transportieren der Stückgutteile, daran anschließend mindestens eine antriebslose Pufferstrecke zum passiven Transportieren der Stückgutteile und daran anschließend mindestens einen Abgabeförderer zum gesteuerten Abgeben der Stückgutteile an der Ladeposition aufweist, wie sie bspw. aus der DE 10 2013 015 134 A1 bekannt ist.

Bei der bekannten Vorrichtung muss bei variablen Höhenunterschieden zwischen der Zuführposition und der Ladeposition die gesamte Transporteinrichtung in eine einheitliche, mehr oder weniger steile Neigung gebracht werden, um den Höhenunterschied auszugleichen. Dies führt dazu, dass die Stückgutteile auf den antriebslosen bzw. passiven Abschnitten, der Entkopplungsstrecke und der Pufferstrecke, bei geringer Neigung nach einem Stopp nicht sicher anlaufen, und bei einer größeren Steigung unter Umständen eine unerwünscht große Endgeschwindigkeit erreichen, was bei einem Anprall eines Stückgutteils gegen eine Wandung des Transportmittels oder gegen andere Stückgutteile zu einer unerwünschten Verlagerung von Stückgutteilen und zu Beschädigungen oder Verformungen führen kann.

Die Aufgabe der Erfindung besteht darin, eine gattungsgemäße Beladevorrichtung dahingehend zu verbessern, dass die vorstehend beschriebenen Nachteile eliminiert sind.

Die vorstehend genannte Aufgabe wird bei einer gattungsgemäßen Beladevorrichtung durch die Maßnahme gelöst, dass zum Ausgleich eines variablen Höhenunterschieds zwischen der Zuführposition und der Ladeposition der Transportförderer und die Pufferstrecke voneinander abweichende Steigungen aufweisen. Es kann ein erstes Mittel zum Einstellen einer Steigung der Transportstrecke und ein zweites, unabhängig von dem ersten Mittel ansteuerbares Mittel zum Einstellen einer Steigung der Pufferstrecke vorgesehen sein. Die ersten und zweiten Mittel können von einer Steuerung in Abhängigkeit von dem Höhenunterschied angesteuert sein. Durch die Vorgabe einer bestimmten Steigung für die antriebslose Pufferstrecke kann je nach Transportaufgabe, d. h. je nach Art der zu beladenden Stückgutteile, eine optimale Steigung eingestellt werden, die sowohl einen sicheren Wiederanlauf nach einem Stopp gewährleistet als auch sicherstellt, dass keine unerwünscht hohen Endgeschwindigkeiten erreicht werden. Je nach Höhenunterschied zwischen Zuführposition und Ladeposition ergibt sich dann eine bestimmte Steigung für den Transportförderer, der den verbleibenden Höhenunterschied zwischen Entkopplungsstrecke und Pufferstrecke überbrückt.

Zwischen der Zuführposition und dem Transportförderer kann eine antriebslose Entkopplungsstrecke zum passiven Transportieren der Stückgutteile angeordnet sein, deren Steigung geringfügig veränderbar oder konstant sein kann.

Es kann vorgesehen sein, dass der Transportförderer eine variable Steigung aufweist und die Entkopplungsstrecke und die Pufferstrecke jeweils eine geringfügig, etwa bis +/- 5° oder 10° veränderbare, oder eine konstante, vorgegebene Steigung aufweisen.

Eine vorgegebene Steigung der Entkopplungsstrecke kann zwischen 5° und 20° oder zwischen 10° und 14° liegen. Eine vorgegebene Steigung der Pufferstrecke kann ebenfalls zwischen 5° und 20° oder zwischen 10° und 14° liegen, und sie kann kleiner, größer oder gleich groß sein wie die vorgegebene Steigung der Entkopplungsstrecke.

Die Entkopplungsstrecke kann als Rollenbahn, Kugelbahn oder Gleitbahn ausgebildet sein. Auch die Pufferstrecke kann als Rollenbahn, Kugelbahn oder Gleitbahn ausgebildet sein.

Der Transportförderer kann als Gurt- oder Rollenförderer ausgebildet sein, und er kann zwei oder mehr in Reihe angeordnete Einzelförderer, insbesondere als Gurt- oder Rollenförderer, umfassen. Bevorzugt ist mit Abstand oberhalb und parallel zu dem Transportförderer ein weiterer Förderer oder es sind in Abständen mehrere Förderelemente angeordnet, so dass Stückgutteile zwischen dem Transportförderer und dem Förderer oder den Förderelementen gehalten und geführt werden und sich bei sehr steilen Winkeln des Transportförderers nicht überschlagen. Der weitere Förderer kann als Gurt- oder Rollenförderer ausgebildet sein und kann einen eigenen Antrieb besitzen oder antriebslos sein und über den Transportförderer mitgenommen werden, sobald sich Stückgutteile zwischen den Förderern befinden. Die Förderelemente können parallel oder unter einem Winkel von bis zu 10° zu dem Transportförderer angeordnet sein.

Eine Länge der Pufferstrecke kann kleiner sein als eine Länge des Transportförderers.

Es kann vorgesehen sein, dass die Transportstrecke an einer Tragkonstruktion gehalten ist, die ein Parallelgestänge aufweist, an dem der Transportförderer gehalten ist. Das Parallelgestänge kann einen oberen und einen unteren Längsverbinder und einen ersten und einen zweiten Anschlagrahmen aufweisen, wobei die Längsverbinder und die Anschlagrahmen unter Bildung eines parallelogrammartigen Viergelenkrahmens gelenkig miteinander verbunden sind.

Bei einer Neigungsverstellung des Transportförderers verändern die Längsverbinder, die parallel zu dem Transportförderer angeordnet sind, mit diesem ihre Neigung und bleiben parallel zueinander ausgerichtet, während die jeweils endseitig angeordneten Anschlagrahmen ebenfalls parallel zueinander bleiben, allerdings ihre Neigung nicht verändern und bspw. stets senkrecht angeordnet sein können. Daher ist zweckmäßigerweise die Entkopplungsstrecke mit dem ersten oder oberen Anschlagrahmen gekoppelt, und die Pufferstrecke ist bevorzugt mit dem zweiten oder unteren Anschlagrahmen gekoppelt, wodurch gewährleistet ist, dass bei einer Neigungsverstellung des Transportförderers die Entkopplungsstrecke und die Pufferstrecke selbsttätig ihre vorgegebene Steigung beibehalten.

Die Transportstrecke kann an einem Fahrwerk gehalten sein, das in einer Zuführungsebene, in der sich die Zuführposition befindet, in und entgegen einer Zuführrichtung verfahrbar ist. Weiterhin kann das Fahrwerk quer zur Zuführrichtung oder schwenkend, wobei ein Punkt im Bereich der Zuführposition einen Schwenkmittelpunkt bildet, verfahrbar sein.

Zur Zuführung von Stückgutteilen kann ein Teleskopförderer vorgesehen sein, der bei einem Verfahren des Fahrwerks eine ununterbrochene Förderverbindung von einer Aufgabeposition, die sich bspw. in einem entfernt liegendem Lager befinden kann, bis zur Zuführposition sicherstellt.

Zur Veränderung eines Höhenunterschieds zwischen Zuführ- und Ladeposition und somit zur Veränderung der Steigung des Transportförderers ist ein längenveränderliches Element, insbesondere ein Zugseil, an dem Transportförderer angebracht und von einem an dem Fahrwerk gehaltenen Antrieb, etwa einer Seilwinde, betätigbar. Das Zugelement bzw. Seil kann an dem Parallelgestänge oder an der Pufferstrecke befestigt sein.

Es kann vorgesehen sein, dass anschließend an die Pufferstrecke ein Abgabeförderer angeordnet ist, insbesondere ein gesteuert antreibbarer Abgabeförderer, um die über die Pufferstrecke ankommenden Stückgutteile gesteuert an einer bestimmten Position abzugeben. Der Abgabeförderer kann mehrere in Reihe angeordnete Abgabeelemente umfassen.

Die der Erfindung zu Grunde liegende Aufgabe wird ferner durch ein Verfahren zum Transportieren von Stückgütern von einer Zufuhreinrichtung zu einem Transportmittel, insbesondere Lastkraftwagen oder Wechselbehälter, unter Verwendung einer Beladevorrichtung gemäß der Erfindung gelöst, wobei bei einer Veränderung eines Höhenunterschieds zwischen der Zuführposition und der Ladeposition eine Steigung des Transportförderers unabhängig von und/oder anders als eine Steigung der Pufferstrecke eingestellt wird. Es kann vorgesehen sein, dass die Steigung des Transportförderers verändert wird, während eine Steigung der Pufferstrecke geringfügig verändert oder konstant gehalten wird. Sofern eine Entkopplungsstrecke vorgesehen ist, kann deren Steigung geringfügig verändert oder konstant gehalten werden.

Die Erfindung wird nachfolgend anhand eines Ausführungsbeispiels weiter beschrieben, wobei auf eine Zeichnung Bezug genommen wird, in der
- Fig. 1: eine schematische perspektivische Ansicht der erfindungsgemäßen Beladevorrichtung zeigt und
- Fig. 2a, b: die Anordnung der Entkopplungsstrecke, des Transportförderers und der Pufferstrecke schematisch für zwei unterschiedliche Höhenunterschiede zwischen Zuführposition und Ladeposition zeigen.

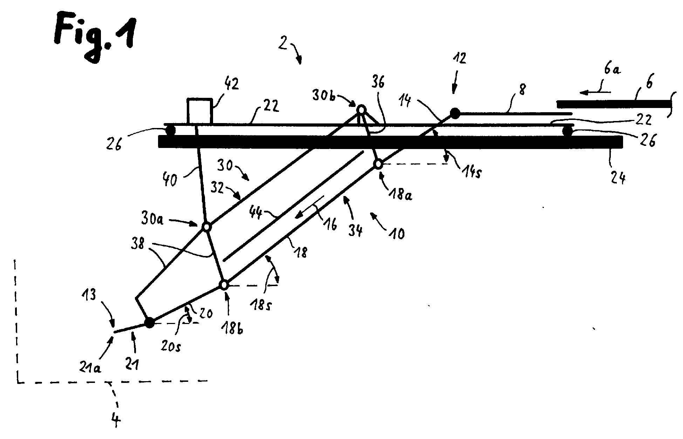

Figur 1 erläutert in einer schematischen Seitenansicht den grundsätzlichen Aufbau einer erfindungsgemäßen Beladevorrichtung 2. Die Beladevorrichtung 2 dient der ortsgenauen Überführung von Stückgutteilen, beispielsweise mit Schüttgut gefüllten Säcken, aus einem nicht dargestellten Lager zu einem Transportmittel 4, vorzugsweise einem Lastkraftwagen.

Die Stückgutteile werden von einer Ausgangs- oder Lagerungsposition mittels einer Zuführeinrichtung, die hier eine Zuführstrecke 6 umfasst, bspw. einen Gurtförderer, in einer Zuführrichtung 6a zugeführt und fallen zunächst auf ein Schleppband 8, das ebenfalls einen Teil der Zuführeinrichtung bildet. Das Schleppband 8 kann als Gurtförderer ausgebildet sein und ist angetrieben. Von dem Schleppband 8 gelangen die Stückgutteile auf eine Transportstrecke 10, die sich aus drei einzelnen Fördereinheiten zusammensetzt. Die Transportstrecke 10 weist zunächst im Anschluss an das Schleppband 8, dessen Ende, in Zuführrichtung 6a gesehen, eine Zuführposition 12 bildet, eine antriebslose Entkopplungsstrecke 14 auf, die insbesondere als Rollenbahn mit frei drehbaren Rollen ausgebildet sein kann. In einer Beladerichtung 16 gesehen anschließend an die Endkopplungsstrecke 14 befindet sich ein angetriebener Transportförderer 18, der in einer Beladerichtung 16 antreibbar ist und an den sich wiederum eine antriebslose Pufferstrecke 20 anschließt, die insbesondere als Rollenbahn mit frei drehbaren Rollen ausgebildet sein kann. Im Anschluss an die Pufferstrecke 20 ist ein Abgabeförderer 21 angeordnet, der über einen gesteuerten Antrieb verfügt und dazu dient, einzelne Stückgutteile gesteuert zur Ablage an einem bestimmten Ort abzugeben. Ein Abgabeende 21 a des Abgabeförderers 21 bildet eine Ladeposition 13.

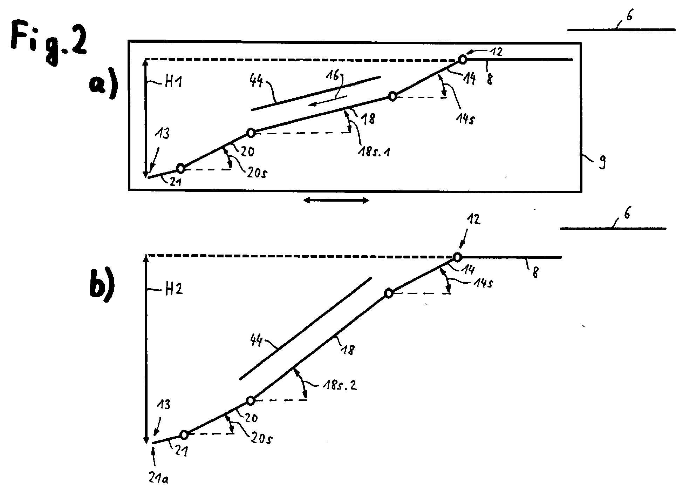

Die Entkopplungsstrecke 14 ist in diesem Beispiel fest mit einem Fahrwerk 22 verbunden, welches horizontal in und entgegen der Zuführrichtung 6a, in der die Zuführstrecke 6 arbeitet, verfahrbar ist. In dem dargestellten Beispiel ist das Fahrwerk 22 auf einer Hallendecke 24 verfahrbar, was durch Rollen 26 angedeutet ist. Durch die Trennung zwischen der Zuführstrecke 6 und dem Schleppband 8 ergibt sich ein teleskopartiges Zusammenwirken zwischen den beiden Förderstrecken, so dass Stückgutteile unabhängig von einer horizontalen Verfahrposition des Fahrwerks 22 stets problemlos von der Zuführstrecke 6 auf das Schleppband 8 und von diesem an die Transportstrecke 10 übergeben werden können. In Fig. 2a ist die horizontale Verfahrbarkeit der aus Transportstrecke 10 und Schleppband 8 bestehenden Einheit, auch als Beladekopf 9 bezeichnet, angedeutet.

Der Transportförderer 18 ist an seinem oberen Ende um eine erste horizontale Schwenkachse 18a schwenkbar mit der Entkopplungsstrecke 14 verbunden, so dass der Transportforderer 18 eine Neigung oder Steigung 18s unabhängig von der Neigung oder Steigung 14s der Entkopplungsstrecke 14, die in diesem Beispiel fest vorgegeben ist, einnehmen kann.

An seinem unteren Ende ist der Transportförderer 18 über eine zweite horizontale Schwenkachse 18b mit der Pufferstrecke 20 verbunden, so dass der Transportförderer 18 seine Steigung auch gegenüber der Steigung der Pufferstrecke 20 unabhängig verändern kann.

Die Transportstrecke 10 ist an dem Fahrwerk 22 über eine Tragkonstruktion gehalten, die ein Parallelgestänge 30 umfasst, welches einen oberen Längsverbinder 32, einen dazu parallelen und gleich langen unteren Längsverbinder 34 sowie einen ersten Anschlagrahmen 36 und einen zweiten Anschlagrahmen 38 umfasst. Die Längsverbinder 32, 34 und die Anschlagrahmen 36, 38 bilden gewissermaßen gegenüberliegende, paarweise parallele Seiten und sind unter Bildung eines parallelogrammartigen Viergelenkrahmens an vier Schwenkachsen gelenkig miteinander verbunden, nämlich an den ersten und zweiten horizontalen Schwenkachsen 18a, 18b sowie an einer dritten horizontalen Schwenkachse 30a und einer vierten horizontalen Schwenkachse 30b, wobei sämtliche Schwenkachsen parallel zueinander sind und quer zur Beladerichtung 16 des Transportförderers 18 verlaufen.

Die erste Schwenkachse 18a und die vierte Schwenkachse 30b sind ortsfest an dem Fahrgestell 22 angeordnet und bestimmen gemeinsam mit der Höhe der Zuführposition 12 eine Neigung oder Steigung der Entkopplungsstrecke 14. Eine vorgegebene Steigung der Entkopplungsstrecke liegt bspw. bei 12°, wodurch gewährleistet ist, dass zugeführte Stückgüter wie insbesondere mit Schüttgut gefüllte Säcke nach einem Stillstand selbsttätig anlaufen, andererseits aber keine zu große Ablaufgeschwindigkeit erreichen. Der erste Anschlagrahmen 36 mit erster Schwenkachse 18a und vierter Schwenkachse 30b ist somit fest am Fahrwerk 22 gehalten und trägt über das Parallelgestänge 30 die beweglichen Teile der Transportstrecke 10, nämlich den Transportförderer 18, die Pufferstrecke 20 und den Abgabeförderer 21. Bei einer vertikalen Verstellung des Parallelgestänges bzw. einer Schwenkbewegung um die erste Schwenkachse 18a und die vierte Schwenkachse 30b verändert sich die Steigung des Transportförderers 18, während die Steigung der fest an dem Fahrwerk 22 angebrachten Entkopplungsstrecke 14 unverändert bleibt. Aufgrund der unveränderlichen Position des ersten Anschlagrahmens 36 behält bei einer derartigen Verstellbewegung auch der zweite Anschlagrahmen 38 wegen der Parallelogrammgeometrie seine Orientierung unverändert bei, so dass eine vorgegebene Steigung 20s der Pufferstrecke 20, die fest mit dem zweiten Anschlagrahmen 38 verbunden ist, ebenfalls unverändert bleibt und zweckmäßigerweise ebenso groß ist wie die Steigung 14s der Entkopplungsstrecke 14. Alternativ können separate und getrennt steuerbare Mittel zur unabhängigen Einstellung der einzelnen Steigungen von Entkopplungsstrecke, Transportstrecke und Pufferstrecke vorgesehen sein.

Zum Verschwenken des Parallelgestänges 30 und zur Höhenverstellung von Transportförderer 18, Pufferstrecke 20 und Abgabeförderer 21 relativ zu dem Fahrwerk 22 dient ein Tragseil 40, das mit einem Ende an dem Parallelgestänge 30, insbesondere im Bereich der dritten Schwenkachse 30a, verbunden ist, und von einer an dem Fahrwerk 22 angeordneten Seilwinde 42 hochgezogen und abgesenkt werden kann.

Um zu vermeiden, dass einzelne Stückgutteile, insbesondere Säcke, im Falle besonders steiler Neigungswinkel des Transportförderers 18 unerwünscht ihre Form verändern oder überschlagen, ist parallel und mit Abstand oberhalb des Transportförderers 18 ein weiterer angetriebener oder antriebsloser Förderer 44 angeordnet, der eine zweite Förderebene parallel und in einem vorgegebenen Abstand von einer ersten Förderebene des Transportförderers 18 bildet. Auf diese Weise werden insbesondere zu fördernde Säcke zwischen den beiden Förderebenen von oben und unten gehalten und geführt. Insbesondere können der Transportförderer 18 und der weitere Förderer 44 jeweils als Gurtförderer ausgebildet sein.

Figur 2a und 2b erläutern die Anordnung von Entkopplungsstrecke, Transportförderer und Pufferstrecke für zwei unterschiedliche Höhenunterschiede H1, H2 zwischen der Zuführstrecke 6 oder der Zuführposition 12 einerseits und einer Ladeposition 13 an einem Abgabeende 21 a des Abgabeförderers 21 andererseits. Anzumerken ist noch, dass der Abgabeförderer 21 zweckmäßigerweise fest mit der Pufferstrecke 20 oder mit dem zweiten Anschlagrahmen 38 verbunden ist, so dass seine Neigung vorzugsweise stets unverändert ist, unabhängig von einer Höhenverstellung der Transportstrecke 10. Der Abgabeförderer 21 ist vorzugsweise horizontal oder weist ein geringes Gefälle auf, etwa 1° bis 15°.

Figur 2a zeigt die Anordnung der Beladevorrichtung 2 für einen ersten Höhenunterschied H1 zwischen Zuführposition 12 und dem Abgabeende 21a des Abgabeförderers 21, während Figur 2b die Anordnung für einen größeren Höhenunterschied H2 zeigt. In beiden Fällen ist die Steigung 14s der Entkopplungsstrecke 14 und 20s der Pufferstrecke 20 gleich groß, während die unterschiedlichen Steigungen 18s.1, 18s.2 des Transportförderers 18 die Differenz zwischen den Höhenunterschieden H1 und H2 ausgleichen.

Um von der Anordnung gemäß Figur 2a mit relativ geringem Höhenunterschied H1 in die Anordnung gemäß Figur 2b mit größerem Höhenunterschied H2 zu gelangen, wird die Seilwinde 42 so betrieben, das Tragseil 40 nach unten ausgegeben wird und das Parallelgestänge 30 abgesenkt wird, und umgekehrt.

**Bezugszeichenliste**

| | |
|---|---|
| 2 | Beladevorrichtung |
| 4 | Transportmittel |
| 6 | Zuführstrecke (Zuführeinrichtung) |
| 6a | Zuführrichtung |
| 8 | Schleppband (Zuführeinrichtung) |
| 9 | Beladekopf |
| 10 | Transportstrecke |
| 12 | Zuführposition |
| 13 | Ladeposition |
| 14 | Entkopplungsstrecke |
| 14s | Steigung |
| 16 | Beladerichtung |
| 18 | Transportförderer |
| 18s | Steigung |
| 18s.1, 18s.2 | Steigung |
| 18a | erste Schwenkachse |
| 18b | zweite Schwenkachse |
| 20 | Pufferstrecke |
| 20s | Steigung |
| 21 | Abgabeförderer |
| 21a | Abgabeende |
| 22 | Fahrwerk |
| 24 | Hallendecke |
| 26 | Rolle |
| 30 | Parallelgestänge |
| 30a | dritte Schwenkachse |
| 30b | vierte Schwenkachse |
| 32 | oberer Längsverbinder |
| 34 | unterer Längsverbinder |
| 36 | erster Anschlagrahmen |
| 38 | zweiter Anschlagrahmen |
| 40 | Tragseil |
| 42 | Seilwinde |
| 44 | weiterer Förderer |
| | |
| H1, H2 | Höhenunterschied |

## Patentansprüche

1. Beladevorrichtung (2) zum Transportieren von Stückgutteilen zu einem Transportmittel (4), mit einer Transportstrecke (10), die sich zwischen einer Zuführposition (12) und einer Ladeposition (13) erstreckt, wobei die Transportstrecke (10) nach der Zuführposition (12) mindestens einen angetriebenen Transportförderer (18) zum aktiven Transportieren der Stückgutteile, daran anschließend mindestens eine antriebslose Pufferstrecke (20) zum passiven Transportieren der Stückgutteile und daran anschließend mindestens einen Abgabeförderer (21) zum gesteuerten Abgeben der Stückgutteile an der Ladeposition (13) aufweist, **dadurch gekennzeichnet, dass** zum Ausgleich von variablen Höhenunterschieden (H1, H2) zwischen der Zuführposition (12) und der Ladeposition (13) der Transportförderer (18) und die Pufferstrecke (20) voneinander abweichende Steigungen (18s, 20s) aufweisen.

2. Beladevorrichtung nach Anspruch 1, **dadurch gekennzeichnet, dass** zwischen Zuführposition (12) und angetriebenem Transportförderer (18) eine antriebslose Entkopplungsstrecke (14) zum passiven Transportieren der Stückgutteile angeordnet ist, die eine konstante, vorgegebene Steigung (14s) aufweist.

3. Beladevorrichtung nach Anspruch 1, **dadurch gekennzeichnet, dass** die vorgegebene Steigung (14s) der Entkopplungsstrecke (14) zwischen 5° und 30° oder zwischen 10° und 14° liegt.

4. Beladevorrichtung nach Anspruch 1 oder 2, **dadurch gekennzeichnet, dass** die vorgegebene Steigung (20s) der Pufferstrecke (20) zwischen 5° und 30° oder zwischen 10° und 14° liegt und gleich groß sein kann wie die vorgegebene Steigung (14s) der Entkopplungsstrecke (14).

5. Beladevorrichtung nach einem der vorangehenden Ansprüche, **dadurch gekennzeichnet, dass** die Entkopplungsstrecke (14) als Rollenbahn, Kugelbahn oder Gleitbahn ausgebildet ist.

6. Beladevorrichtung nach einem der vorangehenden Ansprüche, **dadurch gekennzeichnet, dass** die Pufferstrecke (20) als Rollenbahn, Kugelbahn oder Gleitbahn ausgebildet ist.

7. Beladevorrichtung nach einem der vorangehenden Ansprüche, **dadurch gekennzeichnet, dass** der Transportförderer (18) als Gurt- oder Rollenförderer ausgebildet ist.

8. Beladevorrichtung nach einem der vorangehenden Ansprüche, **dadurch gekennzeichnet, dass** der Transportförderer (18) mehrere in Reihe angeordnete Gurt- oder Rollenförderer umfasst.

9. Beladevorrichtung nach einem der vorangehenden Ansprüche, **dadurch gekennzeichnet, dass** eine Länge der Pufferstrecke (20) kleiner ist als eine Länge des Transportförderers (18).

10. Beladevorrichtung nach einem der vorangehenden Ansprüche, **dadurch gekennzeichnet, dass** mit Abstand oberhalb und parallel zu dem Transportförderer (18) ein weiterer Förderer (44) angeordnet ist, der als Gurt- oder Rollenförderer mit oder ohne eigenen Antrieb oder als Gleitelement ausgebildet sein kann.

11. Beladevorrichtung nach einem der Ansprüche 1 bis 9, **dadurch gekennzeichnet, dass** oberhalb und mit Abstand zu dem Transportförderer (44) mehrere Förderelemente (46) angeordnet sind, die parallel zu dem Transportförderer (18) oder unter einem Winkel (48) von bis zu 10° dazu angeordnet sind.

12. Beladevorrichtung nach einem der vorangehenden Ansprüche, **dadurch gekennzeichnet, dass** die Förderelemente (46) als Gleitelemente, Gleitbleche oder Niederhalter ausgebildet sein können.

13. Beladevorrichtung nach einem der vorangehenden Ansprüche, **dadurch gekennzeichnet, dass** die Transportstrecke (10) an einer Tragkonstruktion gehalten ist, die ein Parallelgestänge (30) aufweist, an dem der Transportförderer (18) gehalten ist.

14. Beladevorrichtung nach einem der vorangehenden Ansprüche, **gekennzeichnet durch** eine Zuführeinrichtung (6, 8) zum Zuführen von Stückgutteilen von einer Transportposition zu der Zuführposition (12).

15. Verfahren zum Beladen von Stückgutteilen unter Verwendung einer Beladevorrichtung (2) nach einem der vorangehenden Ansprüche, **dadurch gekennzeichnet, dass** bei einer Veränderung eines Höhenunterschieds (H1, H2) zwischen der Zuführposition (12) und der Ladeposition (13) eine Steigung (18s) des Transportförderers (18) unabhängig von und/oder anders als eine Steigung (20s) der Pufferstrecke (20) eingestellt wird.

16. Verfahren nach Anspruch 15, **dadurch gekennzeichnet, dass** die Steigung (18s) des Transportförderers (18) verändert wird, während die Steigung (20s) der Pufferstrecke (20) konstant gehalten oder geringfügig geändert wird.

17. Verfahren nach Anspruch 15 oder 16, **dadurch gekennzeichnet, dass** eine Steigung (14s) der Entkopplungsstrecke (14) konstant gehalten oder geringfügig geändert wird.

18. Beladevorrichtung nach einem der vorangehenden Ansprüche, **dadurch gekennzeichnet, dass** der Abgabeförderer (21) mehrere in Reihe angeordnete Abgabeelemente umfasst.
